## Europäisches Patentamt

## European Patent Office

## Office européen des brevets

(19)

(11) Veröffentlichungsnummer: **0 215 005**
**B1**

(12) **EUROPÄISCHE PATENTSCHRIFT**

(45) Veröffentlichungstag der Patentschrift:
**20.04.88**

(51) Int. Cl.⁴: **C 09 D 5/34,** C 09 K 3/10,
C 08 L 63/00

(21) Anmeldenummer: **85905211.0**

(22) Anmeldetag: **28.09.85**

(86) Internationale Anmeldenummer:
**PCT/EP 85/00503**

(87) Internationale Veröffentlichungsnummer:
**WO 86/02661 (09.05.86** Gazette 86/10)

(54) **BESCHICHTUNGSSYSTEM, DEREN HERSTELLUNG UND VERWENDUNG.**

(30) Priorität: **22.10.84 DE 3438690**

(43) Veröffentlichungstag der Anmeldung:
**25.03.87 Patentblatt 87/13**

(45) Bekanntmachung des Hinweises auf die Patenterteilung:
**20.04.88 Patentblatt 88/16**

(84) Benannte Vertragsstaaten:
**AT BE CH DE FR GB IT LI NL SE**

(56) Entgegenhaltungen:
**FR - A - 1 159 906**
**FR - A - 1 564 998**

(73) Patentinhaber: **BASF Lacke + Farben
Aktiengesellschaft, Postfach 61 23, D-4400 Münster (DE)**

(72) Erfinder: **AUGUSTIN, Friedrich, Lindenbuschweg 101,
D-5020 Frechen (DE)**
Erfinder: **CORNEHL, Klaus, Fliederweg 67,
D-5000 Köln 40 (DE)**
Erfinder: **LINDNER, Wolfram, Leimbachweg 19,
D-5000 Köln 80 (DE)**
Erfinder: **WASSONG, Hubert,
Bernhard-Feilchfeldstrasse 1, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein spachtelfähiges Beschichtungssystem auf der Basis eines flüssigen Epoxidharzes und eines bis zur Verarbeitung hiervon getrennt gelagerten, bei Raumtemperatur mit dem Epoxidharz reaktionsfähigen Polyaminhärters, die Herstellung des Beschichtungssystems sowie seine Verwendung als Flächendrainage. In der Praxis kann diese insbesondere für feuchtigkeitsleitende und feuchtigkeitshaltige Betonuntergründe verwendet werden.

Wasserführender Beton, z.B. Kanalisationsrohre, kann erfahrungsgemäss schlecht geschützt werden; folglicherweise weisen Betonflächen starke Korrosionserscheinungen auf. Beton, der sachgemäss zusammengesetzt, hergestellt und eingebaut worden ist, kann den Einwirkungen von Wässern, sofern diese nicht sehr stark betonangreifend sind, und den Einwirkungen der Witterung und der Atmosphäre während der gesamten Nutzungsdauer ungeschützt ohne Schaden widerstehen. Trotzdem kann es aus verschiedenen Gründen zweckmässig sein, Betonbauteile für Tunnel- und Wassersammelanlagen mit einer Beschichtung zu versehen, beispielsweise um die Reinigung der Oberflächen zu erleichtern und die Anlagerung z.B. von Wasserpflanzen und Kleinlebewesen zu erschweren. Ist der Beton längere Zeit sehr starken chemischen Angriffen ausgesetzt, so benötigt er einen Schutzüberzug mit geeigneten Anstrichsystemen auf Kunstharzbasis, da sonst Beton- oder Stahlkorrosionen an Betonbauwerken entstehen. In Wässern vorkommende betonangreifende Stoffe sind zum Beispiel freie Säuren, Sulfide, Sulfate, Magnesiumsalze, Ammoniumsalze und eine Vielzahl von organischen Verbindungen.

Saure Wässer lösen den Zementstein und carbonathaltige Zuschläge langsam auf und führen zu frühzeitigen Korrosionen.

Betonangreifende Stoffe können im Meerwasser, Grundwasser, Moorwasser, Fliesswasser, in häuslichen Abwässern, Industrieabwässern sowie in sulfathaltigen Böden, Moorböden, Aufschüttungsböden und als Verbrennungs- und Industrieabgase vorkommen.

Um bei Betonbauwerken das Auftreten von Rissen einzuschränken, werden Fugen eingesetzt.

Der Beton sollte möglichst ohne Unterbrechung und in gleichmässiger Verdichtung eingebracht werden, um die Rissweite möglichst zu minimieren. Arbeitende Risse im Beton können durch einen harten widerstandsfähigen Beschichtungsfilm nicht überbrückt werden.

Die zu beschichtenden Betonflächen dürfen keiner aufsteigenden oder rückseitigen Feuchtigkeit ausgesetzt sein, damit ein Abdrücken des Anstrichs vermieden wird. Vor dem Aufbringen des Anstrichs muss die Betonfläche sauber und staubfrei sein. Die Betonfläche darf keine die Haftung oder das Aussehen beeinträchtigenden Rückstände von früheren Beschichtungen, von Trenn- oder Nachbehandlungsmitteln aufweisen.

Sehr glatte Betonflächen, wie sie z.B. bei Verwendung von Stahlschalungen oder kunststoffbeschichteter Schalung entstehen, müssen zur Erzielung ausreichender Haftung nach dem Erhärten aufgerauht werden.

Die Anstriche oder Beschichtungen dürfen nur auf oberflächlich gut ausgetrockneten Betonflächen aufgetragen werden. Der Feuchtigkeitsgehalt in der äusseren Schicht soll in der Regel etwa 4 Gew.-% nicht überschreiten.

Die Anstriche sollen möglichst dauerhaft sein und müssen folgenden allgemeinen Anforderungen genügen:

— Beständigkeit gegenüber alkalischen Einwirkungen aus dem Beton (hoher Verseifungswiderstand)

— gute Haftung auf Beton und guter Verbund sowie gute Verträglichkeit innerhalb des Anstrichsystems

— Wasserundurchlässigkeit

— Widerstandsfähigkeit gegenüber den im Wasser auftretenden Mikroorganismen und den dem Wasser evtl. zugesetzten Chemikalien

— Beständigkeit gegenüber atmosphärischen Einflüssen, insbesondere Unempfindlichkeit gegenüber wechselweiser Befeuchtung und Trocknung

— geringe Wasseraufnahme und geringe Neigung zum Quellen

— geringe Neigung zur Verschmutzung Darüber hinaus können andere Kriterien wie Überstreichbarkeit, mechanischer Abrieb und UV-Beständigkeit eine Rolle spielen.

In Ausnahmefällen wird auch die Forderung gestellt, dass sich Beschichtungsmaterialien auf feuchten Untergründen auftragen lassen müssen. Die Forderung der Rissüberbrückung von Beschichtungen durch unvermeidliche Verformungen der Betonbauteile mit Rissweiten bis 0,2 mm und mehr konnte in vielen Fällen durch ungeeignete Beschichtungen nicht erfüllt werden. Rissweiten über 0,2 mm können mit den bekannten Beschichtungsmaterialien nur sehr aufwendig durch zusätzliche Glas- und Kunststoffgewebeeinlagen dickschichtig überbrückt werden.

Nachträglich auftretende Risse bei beschichteten Betonflächen führen zu Rissbildungen in den Beschichtungen, so dass der eigentliche Oberflächenschutz des Betons in diesen Bereichen verlorengeht, das heisst, saure Wässer können in diesen Bereichen in den Beton eindringen oder das Grundwasser kann durch die aufgetretenen Risse im Beton und in der Beschichtung in die abgedichteten Räume eindringen.

Bis zum heutigen Zeitpunkt sind keine Beschichtungsaufbauten bekannt, die einen dauerhaften Schutz bei derartigen Rissbildungen für die Oberflächenbeschichtung gewährleisten. Es ist bekannt, dass dünne Beschichtungen bei auftretenden Rissbildungen im Beton sofort bei der kleinsten Rissbewegung im Beton reissen. Je dicker die Beschichtungsmaterialien aufgetragen werden, um so weniger besteht die Gefahr, dass die Beschichtungen reissen. Je härter die Beschichtungsmaterialien sind, um so schneller werden sie bei Untergrundbewegungen zerstört. Elastische und weiche Beschichtungsmaterialien besitzen zwar eine grössere Dehnfähigkeit, um auftretende Rissbildungen zu überbrücken, sie sind dafür aber weniger geeignet, um mechanisch strapazierfähigen Betonschutz durchzuführen.

Probleme treten bei derartigen Betonbeschichtungen bei im Erdreich verbauten Betonflächen wie Tunneln, Rohren usw. auf.

Durch die ständig wechselnden Grundwasserspiegel oder durch das anfallende Flächenwasser wird bei Rissbildungen im Beton das Wasser durch den Beton bis zur Grenzfläche der wasserdichten und chemikalienbeständigen Beschichtung geleitet, wo es sich flächig hinter der Beschichtung verteilt und zu Haftungsstörungen, Blasenbildungen und schliesslich zu Auf- und Abplatzerscheinungen der Beschichtungen führt. Wie sich aus den Erfahrungen der Praxis zeigt, gibt es keinen verbauten Beton im Erdreich, der nicht zu irgendeinem Zeitpunkt Rissbildungen bekommt, d.h. wasserundicht wird, so dass die eigentlich schützenden Beschichtungsmaterialien den gewünschten dauerhaften Schutz verlieren.

Der Erfindung liegt daher die Aufgabe zugrunde, ein Beschichtungssystem für mineralische Untergründe zu finden, das eine gute Haftung auf dem Untergrund aufweist, beständig ist gegenüber Wässern und atmosphärischen Einflüssen, selbst wenig Wasser aufnimmt und wasserabführend ist.

Diese Aufgabe wird erfindungsgemäss durch ein Beschichtungssystem auf der Basis eines flüssigen Epoxidharzes und eines bis zur Verarbeitung hiervon getrennt gelagerten, bei Raumtemperatur mit dem Epoxidharz reaktionsfähigen Polyaminhärters gelöst, das dadurch gekennzeichnet ist, dass das Epoxidharz und das Polyamin jeweils in einem wässerigen Medium gegebenenfalls unter Mitverwendung eines Emulgators zu einer pastenartigen Emulsion emulgiert sind und mindestens eine der wässerigen Emulsionen einen den Transport von Flüssigkeiten ermöglichenden, Hohlräume aufweisenden Füllstoff enthält, wobei das Volumenverhältnis von emulgiertem Bindemittel zu dem Füllstoff 1:3 bis 1:5 beträgt.

Der Begriff Bindemittel bezeichnet hier das Epoxidharz einerseits und das Polyamin andererseits. Wesentlich ist es, dass das Verhältnis Füllstoff zu Bindemittel so gewählt wird, dass ein ausreichender Durchfluss durch das resultierende Material erzielt wird.

Die Harz-Härter-Kombination aus dem flüssigen Epoxidharz und dem Polyamin kann also ohne Thixotropierungsmittel mittels Wasser zu einer nicht fliessenden Paste emulgiert werden, die anschliessend homogen auf verschiedenen Substraten verteilt werden kann.

Die Hohlräume aufweisenden Füllstoffe können vorteilhafterweise Röhrchen von 2 bis 4 mm Durchmesser und 2 bis 6 mm Länge sein, des weiteren sind auch offenporige Granulate mit 2 bis 4 mm Durchmesser geeignet.

Das emulgierte Bindemittel lässt sich auf diesen granulierten oder röhrchenförmigen Oberflächen fein verteilen, ohne in vorhandene Hohlräume bzw. Öffnungen einzudringen und diese zu verschliessen. Die Füllstoffe, die vorzugsweise in Röhrchenform oder in Granulatform abgewandelt sind, werden hergestellt aus Kunststoffen und Kunstharzen, wie z.B. Polystyrol, Polyethylen, Acrylharzen, Polyestern und vulkanisiertem Kautschuk. Als besonders vorteilhaft hat sich eine 1:1 Gewichtsteilmischung von granulierten und röhrchenförmigen Kunststoffen für die Drainagewirkung herausgestellt, wenn der Gesamtbindemittelgehalt bei 40 bis 50 Gew.-% und der Gehalt der wasserdrainierenden Füllstoffe, bestehend aus Röhrchen und Granulaten, bei ca. 50 bis 60 Gew.-% liegt.

Durch Faserstoffe können die emulgierten Bindemittel auf die Oberflächen der Aussenseiten der verwendeten Füllstoffe fein verteilt werden. Beim Trocknungs- und Aushärtungsprozess werden die Füllstoffe in Granulat- oder Röhrchenform miteinander verbunden und verfestigt, ohne dass die emulgierten Bindemittel in die vorhandenen Hohlräume der Strukturstoffe eindringen.

Bei Mitverwendung von Faserstoffen bilden diese ein stabiles Verbindungsgerüst zwischen den einzelnen Füllstoffen und tragen somit zur Offenhaltung der Verklebungsstellen bei, so dass die Röhrchen und die Granulate nicht durch überschüssiges Bindemittel aufgefüllt werden.

Anstelle von Kunststoffgranulaten können im gleichen Volumenverhältnis auch Granulate aus mineralischen Stoffen, wie z.B. aus geblähtem Silikatgestein, aus Bimsstein oder aus geblähtem Ton, verwendet werden. Das wasserverdünnbare Zweikomponenten-Beschichtungssystem lässt sich leicht auftragen und glätten, bevorzugt sind hierbei Schichtdicken von 4 mm bis 20 mm.

Als aminhärtbare Bindemittelkomponente sind flüssige Epoxidharze auf der Basis von Bisphenol A vorteilhaft. Die Epoxidharze, die aus Bisphenol A und Epichlorhydrin hergestellt werden, sind in Abhängigkeit vom Molverhältnis der Ausgangsstoffe mehr oder weniger viskos. Sie haben gute Haftfestigkeit, chemische Beständigkeit, Flexibilität, Härte und Abriebfestigkeit. Epoxidharze weisen eine hohe Stabilität auf, da sie nur Kohlenstoff-Kohlenstoff-Bindungen und Etherbrücken haben. Die reaktionsfähigen Epoxid- und Hydroxylgruppen sind in weiten Abständen über die Kette verteilt, so dass bei einer nachfolgenden Vernetzung die Vernetzungsstellen genügend weit voneinander entfernt sind. Die mit Aminen ausgehärteten Filme besitzen eine hohe Flexibilität. Die gute Haftfähigkeit beruht auf dem polaren Charakter des Epoxidmoleküls.

Für das erfindungsgemässe Beschichtungssystem sind sowohl niedrigmolekulare bzw. niedrigviskose als auch hochmolekulare und hochviskose flüssige Epoxidharze verwendbar. Durch die Emulgierung mit Wasser ist es möglich geworden, auch hochmolekulare bzw. hochviskose Epoxidharze einzusetzen und diese in eine verarbeitungsfähige Konsistenz zu bringen. Ein weiterer Vorteil des Emulgierens mit Wasser besteht darin, dass die Konsistenz des Bindemittels für viele Einsatzgebiete gezielt gesteuert werden kann. Die wässerigen Emulsionen lassen sich auch mit anderen Kunstharzdispersionen oder Polymerdispersionen auf wässeriger Basis mischen, dies war bislang nur bei niedrigmolekularen bzw. niedrigviskosen Epoxidharzen möglich. Hierbei ist zu beachten, dass die normalerweise Emulgatoren enthaltenden Kunstharzdispersionen vorgelegt werden und die Epoxidharze schrittweise hinzugefügt werden müssen. Vorteilhaft benötigen diese bei Verwendung von Emulgatoren enthaltenden Kunstharzen keinen Emulgator mehr. Vor der Verarbeitung wird der Härter zugegeben, wobei die Topfzeit dieses Zweikomponentensystems 1 bis 2 Stunden beträgt.

Als Polyaminhärter kommen solche in Frage, die bereits bei Raumtemperatur mit dem Epoxidharz unter Vernetzung reagieren, also z.B. aliphatische Polyamine, alkoxylierte Polyamine, aliphatische Aminaddukte, araliphatische Aminaddukte, Polyamidoamine, Polyaminoimidazoline, aromatische Aminaddukte, araliphatische und/oder cycloaliphatische Polyamine.

Die Epoxidharz- und die Polyaminemulsionen werden vor der Verarbeitung in dem Verhältnis gemischt, dass pro Epoxidgruppe eine Aminofunktion vorhanden ist.

Je nach Art der verwendeten Harze und der verwendeten Härter beträgt die Topfzeit 1 bis 2 Stunden. Die Epoxidharze und die Polyamine werden jeweils unter Mitverwendung von geeigneten Emulgatoren, wie z.B. Rizinusölethoxylat, Alkylphenolethoxylat, Ölsäureethoxylat, Fettalkoholethoxylat oder Alkylbenzolsulfonat mit Wasser zu einer pastenartigen oder cremeartigen Konsistenz emulgiert. Derartige Emulsionen lassen sich über Faserstoffe, wie z.B. Perlon-, Nylon-, Glas-, Polyester- oder Polypropylenfasern, weiter ansteifen, so dass sich die emulgierten Epoxidharze und Polyamine auf granulierten und röhrchenförmigen Oberflächen fein verteilen lassen, ohne in vorhandene Öffnungen einzudringen und diese zu verschliessen.

Die Hauptanwendungsgebiete für das Zwei-Komponenten-System aus Epoxidharz-Emulsion und Polyamin-Emulsion sind Grundierungen, Imprägnierungen, Versiegelungen, Rostschutzfarben, Spachtelmassen, Füllmörtel, Drainagen, Dickschichtfarben, Füllfarben, Deckbeschichtungen und Kunstharzputze.

Die Erfindung bezieht sich auch auf ein Verfahren zur Herstellung eines spachtelfähigen Beschichtungssystems auf Basis eines flüssigen Epoxidharzes und eines bei Raumtemperatur mit dem Epoxidharz reaktionsfähigen Polyamins, das dadurch gekennzeichnet ist, dass das Epoxidharz und das Polyamin getrennt in jeweils einem wässerigen Medium, gegebenenfalls unter Mitverwendung eines Emulgators, zu einer pastenartigen Emulsion emulgiert werden, mindestens einer der Komponenten ein den Transport von Flüssigkeiten ermöglichender, Hohlräume aufweisender Füllstoff im Volumenverhältnis von emulgiertem Bindemittel zu dem Füllstoff 1:3 bis 1:5 zugemischt wird und die Emulsionen vor der Verarbeitung gemischt werden.

Die Hohlräume aufweisenden Füllstoffe sind vorzugsweise Röhrchen von 2 bis 4 mm Durchmesser und 2 bis 6 mm Länge und/oder offenporige Granulate mit 2 bis 4 mm Durchmesser.

Das flüssige Epoxidharz leitet sich von Bisphenol A ab, die bereits bei Raumtemperatur mit diesem reaktionsfähigen Polyamine können beispielsweise aliphatische Polyamine, alkoxylierte Polyamine, aliphatische Aminaddukte, araliphatische Aminaddukte, Polyamidoamine, Polyaminoimidazoline, aromatische Aminaddukte, araliphatische und cycloaliphatische Polyamine oder deren Mischungen sein.

Das erfindungsgemässe Beschichtungssystem kann vorteilhafterweise zur Beschichtung von mineralischen Untergründen verwendet werden. Dieses drainierende Beschichtungssystem ist besonders gut geeignet für Betonbauwerke im Erdreich, da hier immer mit einem unkontrollierbaren Wasseranfall gerechnet werden muss. Unter den mineralischen Untergründen sind z.B. unterirdische Tunnelbauten und Wassersammelanlagen zu verstehen.

Das erfindungsgemässe Beschichtungssystem ist besonders gut geeignet für Strassen und Tunnel im U-Bahnbereich, für Stadtentwässerungstunnel im Rohrvortrieb und für Schächte für verschiedene Arbeitsgebiete, da durch das erfindungsgemässe Beschichtungssystem die Innenwandflächen trocken gehalten werden können und Betonkorrosionen vermieden werden.

Die Erfindung betrifft auch eine Flächendrainage, insbesondere für mineralische Untergründe, bestehend aus folgenden Schichten:

A) einer Grundierung, bestehend aus einer wässerigen Epoxidharz/Polyamin-Beschichtungsmasse,

B) einer Drainageschicht, bestehend aus einem spachtelfähigen Beschichtungssystem auf der Basis eines in einem wässerigen Medium gegebenenfalls unter Mitverwendung eines Emulgators emulgierten Epoxidharzes und eines ebenso emulgierten Polyaminhärters, wobei das Beschichtungssystem einen den Transport von Flüssigkeiten ermöglichenden, Hohlräume aufweisenden Füllstoff enthält und das Volumenverhältnis von emulgiertem Bindemittel zu dem Füllstoff 1:3 bis 1:5 beträgt,

C) einer gegebenenfalls übliche Füllstoffe und/oder Fasern enthaltenden Spachtelschicht auf der Basis eines durch einen Polyamin gehärteten Epoxidharzes und

D) einer Pigmente und gegebenenfalls Füllstoffe enthaltenden Deckbeschichtung auf der Basis eines durch ein Polyamin gehärteten Epoxidharzes.

Die den Transport von Flüssigkeiten ermöglichenden, Hohlräume aufweisenden Füllstoffe sind vorzugsweise Röhrchen von 2 bis 4 mm Durchmesser und 2 bis 6 mm Länge und/oder offenporige Granulate mit 2 bis 4 mm Durchmesser.

Durch das Zusammenwirken der 4 Schichten der Flächendrainage wird der Beton vor Korrosionserscheinungen geschützt. Eindringendes Wasser durch den Beton wird durch die Drainageschicht abgeführt. Die Grundierschicht enthält ausserdem übliche Additive, wie Verdickungs- und Netzmittel, die Drainageschicht konsistenzändernde Stoffe, wie z.B. Cellulose und Kieselsäure, die Spachtelschicht enthält als Spachtel- sowie als Füllmasse zur Ausbesserung von Betonbeschichtungen fein- und grobkörnige Quarzmehle und die Deckbeschichtung Verdickungsmittel, Konservierungsmittel, Pigmente sowie Pigmentverteiler.

Die Erfindung betrifft auch ein Verfahren zur Herstellung einer Flächendrainage, insbesondere auf mineralischen Untergründen, das dadurch gekennzeichnet ist, dass nacheinander die folgenden Schichten aufgebracht werden:

A) eine Grundierung, bestehend aus einer Epoxidharz/Polyamin-Beschichtungsmasse,

B) eine Drainageschicht, bestehend aus einem spachtelfähigen Beschichtungssystem auf der Basis eines in einem wässerigen Medium, gegebenenfalls unter Mitverwendung eines Emulgators, emulgierten Epoxidharzes und eines ebenso emulgierten Polyaminhärters, wobei das Beschichtungssystem einen den Transport von Flüssigkeiten ermöglichenden, Hohlräume aufweisenden Füllstoff enthält und das Volumenverhältnis von emulgiertem Bindemittel zu dem Füllstoff 1:3 bis 1:5 beträgt,

C) eine gegebenenfalls übliche Füllstoffe und/oder Fasern enthaltende Spachtelschicht auf der Basis eines durch ein Polyamin gehärteten Epoxidharzes und

D) eine Pigmente und gegebenenfalls Füllstoffe enthaltende Deckbeschichtung auf der Basis eines durch ein Polyamin gehärteten Epoxidharzes.

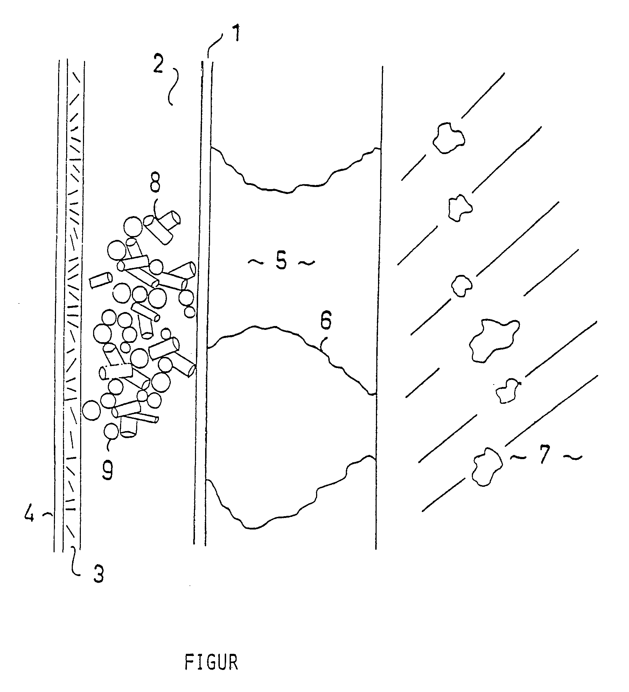

Die den Transport von Flüssigkeiten ermöglichenden, Hohlräume aufweisenden Füllstoffe sind vorzugsweise Röhrchen von 2 bis 4 mm Durchmesser und 2 bis 6 mm Länge und/oder offenporige Granulate von 2 bis 4 mm Durchmesser. Die Epoxidharze, die unter Verwendung eines Emulgators in einem wässerigen Medium emulgiert werden, leiten sich von Bisphenol A ab. Die bei Raumtemperatur mit dem Epoxidharz reaktionsfähigen Polyamine gehören z.B. zur Gruppe der aliphatischen Polyamine, alkoxylierten Polyamine, aliphatischen Aminaddukte, araliphatischen Aminaddukte, Polyamidoamine, Polyaminoimidazoline, aromatischen Aminaddukte, araliphatischen und/oder cyloaliphatischen Polyamine. Im folgenden wird die Erfindung anhand der Zeichnung und anhand von Ausführungsbeispielen näher erläutert.

Prozentangaben beziehen sich auf Gewichts-%, Teile auf Gewichtsteile.

Die beiliegende Figur stellt einen Schnitt durch die Betonflächendrainage dar.

Aus dem Grund- oder Flächenwasser enthaltenden Erdreich (7) gelangt Wasser durch die Betonrisse (6) in den Beton (5). Die im Beton vorhandenen Risse (6) werden durch die Grundierschicht (1) aufgefüllt und überbrückt, so dass der darunter liegende Beton geschützt wird. Durch äussere Einflüsse können aber erneut Risse entstehen, so dass das aufgestaute Bodenwasser in die Drainageschicht (2) gelangt. Durch die Elastizität der Drainageschicht werden die Bewegungen des Baukörpers bis zur Oberfläche der Endbeschichtung abgebaut, so dass keine Rissbildungen auf die Endschicht übertragen werden können. Das durch die Grundierschicht (1) gelangende Wasser wird durch die in der Drainageschicht (2) vorliegenden Füllkörper in Röhrchen — (8) und/oder Granulatform (9) abgeführt. Im Anschluss an die Drainageschicht (2) sind eine Spachtelschicht (3) und als Abschluss eine Deckbeschichtung (4) aufgetragen.

Beispiel 1:

Herstellung einer Drainageschicht

Darstellung der Harzkomponente A)

270 Teile eines Epoxidharzes auf der Basis Bisphenol A und Epichlorhydrin mit einem Epoxidäquivalentgewicht zwischen 180 und 200 g/mol werden in 95 Teilen Wasser unter Zugabe von 20 Teilen Rizinusölethoxylat emulgiert. Dieser wässerigen Emulsion werden 1 Teil Chloressigsäureamid, 3 Teile mittelviskose Cellulose, 1 Teil 25%iger Ammoniak, 10 Teile Eisenoxid sowie jeweils 300 Teile Polyethylenröhrchen von 4 mm Länge und 4 mm Durchmesser und Gummigranulate mit einem Durchmesser von 2 bis 4 mm zugefügt.

Darstellung der Härterkomponente B)

220 Teile eines handelsüblichen cycloaliphatischen Polyamins mit einem H-Äquivalentgewicht zwischen 140 und 150 werden mit Hilfe von 10 Teilen Rizinusölethoxylat in 143,5 Teilen Wasser emulgiert. Der Emulsion werden 1 Teil Chloressigsäureamid, 4,5 Teile mittelviskose Cellulose, 1 Teil 25%iger Ammoniak, 10 Teile Kieselsäure, 10 Teile $TiO_2$ und jeweils 300 Teile Polyethylenröhrchen von 4 mm Länge und 4 mm Durchmesser und Gummigranulate mit 2 bis 4 mm Durchmesser zugefügt.

Die Komponenten A) und B) werden im Gewichtsverhältnis 1:1 gemischt und sind verarbeitungsfertig. Ein derartiger Drainageputz hat bei einer Schichtdicke von 4 bis 5 mm und einer Schichtbreite von 1 m eine Wasserdurchlaufmenge von 150 bis 200 l/m.

Beispiel 2:

Herstellung einer Grundierschicht

Darstellung der Harzkomponente A)

466 Teile Epoxidharz auf der Basis Bisphenol A und Epichlorhydrin mit einem Epoxidäquivalentgewicht zwischen 180 und 200 g/mol werden in 494 Teilen Wasser mit Hilfe von 35 Teilen Rizinusölethoxylat emulgiert. Der Emulsion werden 3 Teile mittelviskose Cellulose, 1 Teil 25%iger Ammoniak und 1 Teil eines aliphatischen Sulfonats zugegeben.

Darstellung der Härterkomponente B)

384 Teile eines handelsüblichen cycloaliphatischen Polyamins mit einem H-Äquivalentgewicht zwischen 140 und 150 werden unter Zugabe von 15 Teilen Rizinusölethoxylat in 593 Teilen Wasser emulgiert. Der Emulsion werden 6 Teile mittelviskose Cellulose, 1 Teil 25%iger Ammoniak und als Netzmittel 1 Teil eines aliphatischen Sulfonats zugegeben.

Die Komponenten A) und B) werden im Gewichtsverhältnis 1:1 gemischt. Der Festkörpergehalt des ausgehärteten Epoxid/Polyamin-Harzes liegt bei ca. 45%. Durch Verringerung des Wassergehaltes kann der Festkörpergehalt bis auf ca. 70% gesteigert werden. Durch Zugabe von Wasser kann der Harzanteil beliebig verringert und die Eindringtiefe verbessert werden.

### Beispiel 3:

Herstellung einer Spachtelmasse

Darstellung der Harzkomponente A)

350 Teile eines flüssigen Epoxidharzes auf Basis Bisphenol A und Epichlorhydrin mit einem Epoxidäquivalentgewicht zwischen 180 und 200 g/mol werden unter Zugabe von 20 Teilen Rizinusölethoxylat in 62 Teilen Wasser emulgiert. Der Emulsion werden 10 Teile $TiO_2$, 175 feines Quarzmehl und 383 Teile grobes Quarzmehl zugefügt.

Darstellung der Härterkomponente B)

280 Teile eines handelsüblichen cycloaliphatischen Polyamins mit einem H-Äquivalentgewicht zwischen 140 und 150 werden unter Zugabe von 10 Teilen Rizinusölethoxylat in 42 Teilen Wasser emulgiert. Der Emulsion werden 100 Teile feines und 568 Teile grobes Quarzmehl zugegeben.

A) und B) werden im Verhältnis 1:1 gemischt. Die sofort verarbeitbare, eine hohe Fülle aufweisende Spachtelmasse füllt Untergründe gut aus und lässt sich leicht glätten. Durch Mitverwendung von 0,5 bis 3% Perlonkurzschnittfasern von 4 bis 8 mm Schnittlänge erhält man eine Spachtelmasse, die Untergrundrisse überbrückt. Eine derartige Spachtelmasse kann zur Abdeckung und Füllung einer Flächendrainage eingesetzt werden.

### Beispiel 4:

Herstellung einer Deckbeschichtung

Darstellung der Harzkomponente A)

466 Teile Epoxidharz auf der Basis von Bisphenol A und Epichlorhydrin mit einem Epoxidäquivalentgewicht zwischen 180 und 200 g/mol werden unter Zugabe von 35 Teilen Rizinusölethoxylat in 130 Teilen Wasser emulgiert.

Dieser wässerigen Emulsion werden 1 Teil Chloressigsäureamid, 1 Teil Na-Salz der Polyacrylsäure, 267 Teile Titandioxid in der Rutil-Modifikation, 96 Teile Wasser, 3 Teile mittelviskose Cellulose und 1 Teil 25%iger Ammoniak zugegeben.

Darstellung der Härterkomponente B)

384 Teile eines handelsüblichen cycloaliphatischen Polyamins mit einem H-Äquivalentgewicht zwischen 140 und 150 werden unter Zugabe von 15 Teilen Rizinusölethoxylat in 132 Teilen Wasser emulgiert. Dieser Emulsion werden 1 Teil Chloressigsäureamid, 1 Teil Na-Salz der Polyacrylsäure, 267 Teile Titandioxid in der Rutil-Modifikation, 193 Teile Wasser, 6 Teile mittelviskose Cellulose und 1 Teil 25%iger Ammoniak zugegeben.

Die Komponenten A) und B) werden im Verhältnis 1:1 gemischt. Die Mischung lässt sich etwa eine Stunde lang verarbeiten und ist in 2 bis 3 Stunden durchgehärtet. Der Festkörpergehalt dieser weissen Beschichtungsfarbe liegt bei ca. 66%. Durch Mitverwendung von Eisenoxidpigmenten und organischen Buntpigmenten kann jeder beliebige Farbton eingestellt werden. Derartige Farben lassen sich mit Wasser auf Verarbeitungskonsistenz einstellen und mit Pinsel, Farbroller oder Spritzgeräten verarbeiten.

Je nach gewünschter Konsistenz der entsprechenden Massen oder Beschichtungen kann anstelle von Wasser auch eine 10%ige Montmorillonit-Paste, die sich gut verspachteln lässt, eingesetzt werden.

FR-A-1159906 beschreibt zwar durch hohle Glasfasern verstärkte Harzmassen. Solche Verstärkungsarmaturen stellen jedoch keine den Transport von Flüssigkeiten ermöglichenden, Hohlräume aufweisenden Füllstoffe im Sinne des Patents dar.

### Patentansprüche

1. Spachtelfähiges Beschichtungssystem auf der Basis eines flüssigen Epoxidharzes und eines bis zur Verarbeitung hiervon getrennt gelagerten, bei Raumtemperatur mit dem Epoxidharz reaktionsfähigen Polyaminhärters, dadurch gekennzeichnet, dass das Epoxidharz und das Polyamin jeweils in einem wässerigen Medium gegebenenfalls unter Mitverwendung eines Emulgators zu einer pastenartigen Emulsion emulgiert sind und mindestens eine der wässerigen Emulsionen einen den Transport von Flüssigkeiten ermöglichenden, Hohlräume aufweisenden Füllstoff enthält, wobei das Volumenverhältnis von emulgiertem Bindemittel zu dem Füllstoff 1:3 bis 1:5 beträgt.

2. Beschichtungssystem nach Anspruch 1, dadurch gekennzeichnet, dass es als Hohlräume aufweisenden Füllstoff Röhrchen von 2 bis 4 mm Durchmesser und 2 bis 6 mm Länge enthält.

3. Beschichtungssystem nach Anspruch 1 oder 2, dadurch gekennzeichnet, dass es als Hohlräume aufweisenden Füllstoff ein offenporiges Granulat mit 2 bis 4 mm Durchmesser enthält.

4. Beschichtungssystem nach Anspruch 1 bis 3, dadurch gekennzeichnet, dass es ein Epoxidharz auf der Basis von Bisphenol A enthält.

5. Beschichtungssystem nach Anspruch 1 bis 4, dadurch gekennzeichnet, dass die bei Raumtemperatur mit dem Epoxidharz reaktionsfähigen Polyamine aliphatische Polyamine, alkoxylierte Polyamine, aliphatische Aminaddukte, araliphatische Aminaddukte, Polyamidoamine, Polyaminoimidazoline, aromatische Aminaddukte, araliphatische und/oder cycloaliphatische Polyamine sind.

6. Verfahren zur Herstellung eines spachtelfähigen Beschichtungssystems auf Basis eines flüssigen Epoxidharzes und eines bei Raumtemperatur mit dem Epoxidharz reaktionsfähigen Polyamins, dadurch gekennzeichnet, dass das Epoxidharz und das Polyamin getrennt in jeweils einem wässerigen Medium, gegebenenfalls unter Mitverwendung eines Emulgators, zu einer pastenartigen Emulsion emulgiert werden, mindestens einer der Komponenten ein den Transport von Flüssigkeiten ermöglichender, Hohlräume aufweisender Füllstoff im Volumenverhältnis von emulgiertem Bindemittel zu dem Füllstoff 1:3 bis 1:5 zugemischt wird und die Emulsionen vor der Verarbeitung gemischt werden.

7. Verfahren zur Herstellung eines Beschichtungssystems nach Anspruch 6, dadurch gekennzeichnet, dass die Hohlräume aufweisenden Füllstoffe Röhrchen von 2 bis 4 mm Durchmesser und 2 bis 6 mm Länge sind.

8. Verfahren zur Herstellung eines Beschichtungssystems nach Anspruch 6 oder 7, dadurch gekennzeichnet, dass der Hohlräume aufweisende Füllstoff ein offenporiges Granulat mit 2 bis 4 mm Durchmesser ist.

9. Verfahren zur Herstellung eines Beschichtungssystems nach Anspruch 6 bis 8, dadurch gekennzeichnet, dass das Epoxidharz auf der Basis Bisphenol A ist.

10. Verfahren zur Herstellung eines Beschichtungssystems nach Anspruch 6 bis 9, dadurch gekennzeichnet, dass die bei Raumtemperatur mit dem Epoxidharz reaktionsfähigen Polyamine aliphatische Polyamine, alkoxylierte Polyamine, aliphatische Aminaddukte, araliphatische Aminaddukte, Polyamidoamine, Polyaminoimidazoline, aromatische Aminaddukte, araliphatische und/oder cycloaliphatische Polyamine sind.

11. Verwendung des Beschichtungssystems nach Anspruch 1 bis 5 zur Herstellung einer Flüssigkeit abführenden Beschichtung auf mineralischen Untergründen.

12. Verwendung nach Anspruch 11, dadurch gekennzeichnet, dass die mineralischen Untergründe unterirdische Tunnelbauten und Wassersammelanlagen sind.

13. Flächendrainage, insbesondere für mineralische Untergründe, bestehend aus folgenden Schichten:

A) einer Grundierung (1), bestehend aus einer wässerigen Epoxid/Polyamin-Beschichtungsmasse,

B) einer Drainageschicht (2), bestehend aus einem ausgehärteten Beschichtungssystem auf der Basis eines in einem wässerigen Medium gegebenenfalls unter Mitverwendung eines Emulgators emulgierten Epoxidharzes und eines ebenso emulgierten Polyaminhärters, wobei das Beschichtungssystem einen den Transport von Flüssigkeiten ermöglichenden, Hohlräume aufweisenden Füllstoff enthält und das Volumenverhältnis von emulgiertem Bindemittel zu dem Füllstoff 1:3 bis 1:5 beträgt.

C) einer gegebenenfalls übliche Füllstoffe und/oder Fasern enthaltenden Spachtelschicht (3) auf der Basis eines durch eine Polyamin gehärteten Epoxidharzes und

D) einer Pigmente und gegebenenfalls Füllstoffe enthaltenden Deckbeschichtung (4) auf der Basis eines durch ein Polyamin gehärteten Epoxidharzes.

14. Flächendrainage nach Anspruch 13, dadurch gekennzeichnet, dass die den Transport von Flüssigkeiten ermöglichenden, Hohlräume aufweisenden Füllstoffe Röhrchen von 2 bis 4 mm Durchmesser und 2 bis 6 mm Länge sind.

15. Flächendrainage nach Anspruch 13 oder 14, dadurch gekennzeichnet, dass die den Transport von Flüssigkeiten ermöglichenden, Hohlräume aufweisenden Füllstoffe offenporige Granulate mit 2 bis 4 mm Durchmesser sind.

16. Verfahren zur Herstellung einer Flächendrainage, insbesondere auf mineralischen Untergründen, dadurch gekennzeichnet, dass nacheinander die folgenden Schichten aufgebracht werden:

A) eine Grundierung (1), bestehend aus einer Epoxid/Polyamin-Beschichtungmasse,

B) eine Drainageschicht (2), bestehend aus einem spachtelfähigen Beschichtungssystem auf der Basis eines in einem wässerigen Medium gegebenenfalls unter Mitverwendung eines Emulgators emulgierten Epoxidharzes und eines ebenso emulgierten Polyaminhärters, wobei das Beschichtungssystem einen den Transport von Flüssigkeiten ermöglichenden, Hohlräume aufweisenden Füllstoff enthält und das Volumenverhältnis von emulgiertem Bindemittel zu dem Füllstoff 1:3 bis 1:5 beträgt,

C) eine gegebenenfalls übliche Füllstoffe und/oder Fasern enthaltende Spachtelschicht (3) auf der Basis eines durch ein Polyamin gehärteten Epoxidharzes und

D) eine Pigmente und gegebenenfalls Füllstoffe enthaltende Deckbeschichtung (4) auf der Basis eines durch ein Polyamin gehärteten Epoxidharzes.

17. Verfahren zur Herstellung einer Flächendrainage nach Anspruch 16, dadurch gekennzeichnet, dass die den Transport von Flüssigkeiten ermöglichenden, Hohlräume aufweisenden Füllstoffe Röhrchen von 2 bis 4 mm Durchmesser und 2 bis 6 mm Länge sind.

18. Verfahren zur Herstellung einer Flächendrainage nach Anspruch 16 oder 17, dadurch gekennzeichnet, dass die den Transport von Flüssigkeiten ermöglichenden, Hohlräume aufweisenden Füllstoffe offenporige Granulate von 2 bis 4 mm Durchmesser sind.

19. Verfahren zur Herstellung einer Flächendrainage nach Anspruch 16 bis 18, dadurch gekennzeichnet, dass das Epoxidharz auf der Basis von Bisphenol A ist.

20. Verfahren zur Herstellung einer Flächendrainage nach Anspruch 16 bis 19, dadurch gekennzeichnet, dass die bei Raumtemperatur mit dem Epoxidharz reaktionsfähigen Polyamine aliphatische Polyamine, alkoxylierte Polyamine, aliphatische Aminaddukte, araliphatische Aminaddukte, Polyamidoamine, Polyaminoimidazoline, aromatische Aminaddukte, araliphatische und/ oder cycloaliphatische Polyamine sind.

## Claims

1. A trowel-appliable coating system based on a liquid epoxy resin and a polyamine hardener which is capable of reacting with the epoxy resin at room temperature and is stored separately therefrom until the time of preparation, characterized in that the epoxy resin and the polyamine are each emulsified into paste-like emulsions in an aqueous medium with the optional use of an emulsifier and in that at least one of the aqueous emulsions contains a filler material which enables transport of liquids and contains cavities, the volume ratio of the emulsified binder to the filler material being from 1:3 to 1:5.

2. A coating system according to claim 1, characterized in that it contains as the cavity-containing filler material tubules of from 2 to 4 mm in diameter and from 2 to 6 mm in length.

3. A coating system according to claim 1 or claim 2, characterized in that it contains as the cavity-containing filler material an open-pore granular material with a diameter of from 2 to 4 mm.

4. A coating system according to any one of claims 1 to 3, characterized in that it contains an epoxy resin based on bisphenol A.

5. A coating system according to any one of claims 1 to 4, characterized in that the polyamine capable of reacting at room temperature with the epoxy resin is an aliphatic polyamine, an alkoxylated polyamine, an aliphatic amine adduct, an araliphatic amine adduct, a polyamidoamine, a polyaminoimide azoline, an aromatic amine adduct, an araliphatic and/or a cycloaliphatic polyamine.

6. A process for the production of a trowel-appliable coating system based on a liquid epoxy resin and a polyamine capable of reacting with the epoxy resin at room temperature, characterized in that the epoxy resin and the polyamine are each emulsified into paste-like emulsions in an aqueous medium with the optional use of an emulsifier, in that to at least one of the components is added a filler material which enables transport of liquids and contains cavities, in a volume ratio of emulsified binder to filler material of from 1:3 to 1:5 and in that the emulsions are mixed before processing.

7. A process for the production of a coating system according to claim 6, characterized in that the cavity-containing filler material is tubules of from 2 to 4 mm in diameter and from 2 to 6 mm in length.

8. A process for the production of a coating system according to claim 6 or claim 7, characterized in that the cavity-containing filler material is an open-pore granular material with a diameter of from 2 to 4 mm.

9. A process for the production of a coating system according to any one of claims 6 to 8, characterized in that the epoxy resin is based on bisphenol A.

10. A process for the production of a coating system according to any one of claims 6 to 9, characterized in that the polyamine capable of reacting at room temperature with the epoxy resin is an aliphatic polyamine, an alkoxylated polyamine, an aliphatic amine adduct, an araliphatic amine adduct, a polyamidoamine, a polyaminoimide azoline, an aromatic amine adduct, an araliphatic and/or a cycloaliphatic polyamine.

11. The use of the coating system according to any one of claims 1 to 5 for the production of a coating for draining liquid on mineral substrata.

12. The use according to claim 11, characterized in that the mineral substrata are subterranean tunnel structures and water collecting plants.

13. A surface drainage system, especially for mineral substrata, consisting of the following layers:

A) a priming coat (1), consisting of an aqueous epoxy/polyamine coating mass,

B) a drainage layer (2), consisting of a hardened coating system based on an epoxy resin emulsified in an aqueous medium with the optional use of an emulsifier and a similarly emulsified polyamine hardener, the coating system containing a filler material which enables transport of liquids and contains cavities and the volume ratio for the emulsified binder to the filler material being from 1:3 to 1:5,

C) a trowel-appliable layer (3) optionally containing usual filler materials and/or fibres and based on an epoxy resin hardened by a polyamine, and

D) a covering layer (4) containing pigments and optionally filler materials based on an epoxy resin hardened by a polyamine.

14. A surface drainage system according to claim 13, characterized in that the filler material enabling the transport of liquids and containing cavities is tubules with diameters of from 2 to 4 mm and lengths of from 2 to 6 mm.

15. A surface drainage system according to claim 13 or claim 14, characterized in that the filler material enabling the transport of liquids and containing cavities is open-pore granular material with a diameter of from 2 to 4 mm.

16. A process for the production of a surface drainage system, especially on mineral substrata, characterized in that the following layers are applied after each other:

A) a priming coat (1), consisting of an epoxy/polyamine coating mass,

B) a drainage layer (2), consisting of a trowel-appliable coating system based on an epoxy resin emulsified in an aqueous medium with the optional use of an emulsifier and a similarly emulsified polyamine hardener, the coating system containing a filler material which enables the transport of liquids and contains cavities and the volume ratio of the emulsified binder to the filler material being from 1:3 to 1:5,

C) a trowel-appliable layer (3) optionally containing usual filler materials and/or fibres and based on an epoxy resin hardened by a polyamine, and

D) a covering layer (4) containing pigments and optionally filler materials based on an epoxy resin hardened by a polyamine.

17. A process for the production of a surface drainage system according to claim 16, characterized in that the filler material enabling the transport of liquids and containing cavities is tubules with diameters of from 2 to 4 mm and lengths of from 2 to 6 mm.

18. A process for the production of a surface drainage system according to claim 16 or claim 17, characterized in that the filler material enabling the transport of liquids and containing cavities is open-pore granular material with a diameter of from 2 to 4 mm.

19. A process for the production of a surface drainage system according to any one of claims 16 to 18, characterized in that the epoxy resin is based on bisphenol A.

20. A process for the production of a surface drainage system according to any one of claims 16 to 19, characterized in that the polyamine capable of reacting at room temperature with the epoxy resin is an aliphatic polyamine, an alkoxylated polyamine, an aliphatic amine adduct, an araliphatic amine adduct, a polyamidoamine, a polyaminoimide azoline, an aromatic amine adduct, an araliphatic and/or a cycloaliphatic polyamine.

## Revendications

1. Système de revêtement applicable à la spatule, à base d'une résine d'époxyde liquide et d'un durcisseur réactif à la température ambiante vis-à-vis de la résine d'époxyde, stocké séparément de celle-ci jusqu'à sa mise en œuvre, caractérisé par le fait que la résine d'époxyde et la polyamine sont émulsifiées chacune en une émulsion pâteuse dans un milieu aqueux, éventuellement avec utilisation conjointe d'un émulsifiant et qu'au moins une des émulsions aqueuses contient une charge présentant des cavités, permettant le transport de liquides, le rapport en volume du liant émulsifié à la charge étant de 1:3 à 1:5.

2. Système de revêtement selon la revendication 1, caractérisé par le fait que comme charge présentant des cavités, il contient de petits tubes de 2 à 4 mm de diamètre et 2 à 6 mm de longueur.

3. Système de revêtement selon l'une des revendications 1 et 2, caractérisé par le fait que comme charge présentant des cavités, il contient un granulé à pores ouverts de 2 à 4 mm de diamètre.

4. Système de revêtement selon l'une des revendications 1 à 3, caractérisé par le fait qu'il contient une résine d'époxyde à base de bisphénol A.

5. Système de revêtement selon l'une des revendications 1 à 4, caractérisé par le fait que les polyamines réactives à la température ambiante vis-à-vis de la résine d'époxyde sont des polyamines aliphatiques, des polyamines alcoxylées, des produits aliphatiques d'addition d'amine, des produits araliphatiques d'addition d'amine, des polyamidoamines, des polyamino-imidazolines, des produits aromatiques d'addition d'amine, des polyamines araliphatiques et/ou cycloaliphatiques.

6. Procédé pour la préparation d'un système de revêtement applicable à la spatule, à base d'une résine d'époxyde liquide et d'un durcisseur réactif à la température ambiante vis-à-vis de la résine d'époxyde, caractérisé par le fait que l'on émulsifie séparément la résine d'époxyde et la polyamine chacune dans un milieu aqueux, éventuellement avec utilisation conjointe d'un émulsifiant, qu'à au moins un des constituants on mélange une charge présentant des cavités, permettant le transport de liquides, en un rapport en volume liant émulsifié/charge de 1:3 à 1:5 et que l'on mélange les émulsions avant la mise en œuvre.

7. Procédé pour la préparation d'un système de revêtement selon la revendication 6, caractérisé par le fait que les charges contenant des cavités sont de petits tubes de 2 à 4 mm de diamètre et 2 à 6 mm de longueur.

8. Procédé pour la préparation d'un système de revêtement selon l'une des revendications 6 et 7, caractérisé par le fait que la charge présentant des cavités est un granulé à pores ouverts de 2 à 4 mm de diamètre.

9. Procédé pour la préparation d'un système de revêtement selon l'une des revendications 6 à 8, caractérisé par le fait que la résine d'époxyde est à base de bisphénol A.

10. Procédé pour la préparation d'un système de revêtement selon l'une des revendications 6 à 9, caractérisé par le fait que les polyamines réactives à la température ambiante vis-à-vis de la résine d'époxyde sont des polyamines aliphatiques, des polyamines alcoxylées, des produits aliphatiques d'addition d'amine, des produits araliphatiques d'addition d'amine, des polyamidoamines, des polyamino-imidazolines, des produits aromatiques d'addition d'amine, des polyamines araliphatiques et/ou cycloaliphatiques.

11. Utilisation du système de revêtement selon l'une des revendications 1 à 5 pour la réalisation d'un revêtement repoussant les liquides sur des subjectiles minéraux.

12. Utilisation selon la revendication 11, caractérisée par le fait que les subjectiles minéraux sont des constructions souterraines de tunnel et des installations collectrices d'eau.

13. Drainage de surface, en particulier pour sous-sols minéraux, formé des couches suivantes:

A) un apprêt (1) formé d'une masse de revêtement aqueuse époxyde/polyamine;

B) une couche de drainage (2) formée d'un système de revêtement durci à base d'une résine d'époxyde émulsifiée dans un milieu aqueux éventuellement avec utilisation conjointe d'un émulsifiant, et d'un durcisseur de type polyamine également émulsifié, le système de revêtement contenant une charge présentant des cavités et permettant le transport de liquides, et le rapport en volume du liant émulsifié à la charge étant de 1:3 à 1:5;

C) une couche appliquée à la spatule (3) contenant éventuellement des charges usuelles et/ou des fibres, à base d'une résine d'époxyde durcie par une polyamine, et

D) un revêtement de recouvrement (4) contenant des pigments et éventuellement des charges, à base d'une résine d'époxyde durcie par une polyamine.

14. Drainage de surface selon la revendication 13, caractérisé par le fait que les charges présentant des cavités, permettant le transport de liquides, sont de petits tubes de 2 à 4 mm de diamètre et 2 à 6 mm de longueur.

15. Drainage selon l'une des revendications 13 ou 14, caractérisé par le fait que les charges présentant des cavités et permettant le transport de liquides sont des granulés à pores ouverts de 2 à 4 mm de diamètre.

16. Procédé pour la réalisation d'un drainage de surface, en particulier sur sous-sol, caractérisé par le fait que l'on applique successivement les couches suivantes:

A) un apprêt (1) formé d'une masse de revêtement époxyde/polyamine;

B) une couche de drainage (2) formée d'un système de revêtement applicable à la spatule, à base d'une résine d'époxyde émulsifiée dans un milieu aqueux, éventuellement avec utilisation conjointe d'un émulsifiant, et d'un durcisseur de type polyamine, également émulsifié, le système de revêtement contenant une charge présentant des cavités, permettant le transport de liquides, et le rapport en volume du liant émulsifié à la charge étant de 1:3 à 1:5;

C) une couche applicable à la spatule (3) contenant des charges usuelles et/ou des fibres, à base d'une résine d'époxyde durcie par une polyamine, et

D) un revêtement de recouvrement (4) à base d'une résine d'époxyde durcie par une polyamine, contenant des pigments et des charges.

17. Procédé pour la réalisation d'un drainage de surface selon la revendication 16, caractérisé par le fait que les charges présentant des cavités, permettant le transport de liquides, sont de petits tubes de 2 à 4 mm de diamètre et 2 à 6 mm de longueur.

18. Procédé pour la réalisation d'un drainage de surface selon l'une des revendications 16 et 17, caractérisé par le fait que les charges présentant des cavités et permettant le transport de liquides sont des granulés à pores ouverts de 2 à 4 mm de diamètre.

19. Procédé pour la réalisation d'un drainage de surface selon l'une des revendications 16 à 18, caractérisé par le fait que la résine d'époxyde est à base de bisphénol A.

20. Procédé pour la réalisation d'un drainage de surface selon l'une des revendications 16 à 19, caractérisé par le fait que les polyamines réactives à la température ambiante vis-à-vis de la résine d'époxyde sont des polyamines aliphatiques, des polyamines alcoxylées, des produits aliphatiques d'addition d'amine, des produits araliphatiques d'addition d'amine, des polyamidoamines, des polyamino-imidazolines, des produits aromatiques d'addition d'amine, des polyamines araliphatiques et/ou cycloaliphatiques.

FIGUR